# EUROPEAN PATENT APPLICATION

(11) **EP 4 749 541 A1**
(43) Date of publication of application: **27.05.2026**
(21) Application number: 23945904.3
(22) Date of filing: 20.07.2023
(51) Int. Cl.: G06Q 10/06

(54) **INFORMATION PROPOSAL SYSTEM AND INFORMATION PROPOSAL METHOD**

(71) Applicant: MITSUBISHI ELECTRIC CORPORATION, Chiyoda-ku Tokyo 100-8310 (JP)
(72) Inventor: UENO, Mariko, Tokyo 100-8310 (JP); NISHIMURA, Shinya, Tokyo 100-8310 (JP); KASHIMA, Takahiro, Tokyo 100-8310 (JP); OKA, Ryunosuke, Tokyo 100-8310 (JP); DOMINGUEZ, Naito, Tokyo 100-8310 (JP)
(74) Representative: Meissner Bolte Partnerschaft mbB
(86) International application number: PCT/JP2023/026563
(87) International publication number: WO 2025/017901

(57) **Abstract**

An information item that promotes a match between a need and a seed is provided to the user. An information proposal system includes: an analyzer to generate a combination of an input information item and a need information item or at least one seed information item, and analyze a matching degree between the input information item and the need information item or the at least one seed information item; a proposing unit to propose at least one combination of the need information item and the at least one seed information item according to the matching degree; and an additional information request unit to request an additional information item that is an information item to be added in association with the input information item when an additional information request is input.

## Description

### BACKGROUND OF THE INVENTION

### Field of the Invention

The invention disclosed herein relates to an information proposal technology.

### Description of the Background Art

Recent years have seen difficulty in implementing processes from devising a solution or a plan to reaching commercial fruition by a single company.

On the other hand, one with a superior technology or a superior idea often fails to find a proper partner and disappears in obscurity. Thus, implementation of matching systems each bridging the technology or the idea has been desired (e.g., see Patent Document 1).

### PRIOR ART DOCUMENT

### PATENT DOCUMENT

| | |
|---|---|
| Patent Document 1: | WO 2019/013344 A1 |

### SUMMARY

### PROBLEM TO BE SOLVED BY THE INVENTION

Even when a need (a problem) matches a seed (a solution), if information of one or both of the need and the seed is insufficient, it is sometimes difficult to pursue smooth commercialization.

The invention disclosed herein has been conceived in view of the aforementioned problem, and is an invention for providing an information item that promotes a match between a need and a seed.

### MEANS TO SOLVE THE PROBLEM

An information proposal system according to a first aspect of the invention disclosed herein is an information proposal system that provides an information item on a combination of a need information item and at least one seed information item corresponding to the need information item, the information proposal system including: an information input unit in which at least one of the need information item or the at least one seed information item is input as an input information item; an analyzer to generate a combination of the input information item and the need information item or the at least one seed information item, and analyze a matching degree between the input information item and the need information item or the at least one seed information item; a proposing unit to propose at least one combination of the need information item and the at least one seed information item according to the matching degree; and an additional information request unit to request an additional information item that is an information item to be added in association with the input information item when an additional information request is input.

### EFFECTS OF THE INVENTION

According to at least the first aspect of the invention disclosed herein, a proper match between a need information item and a seed information item can be promoted by requesting an additional information item.

The object, features, aspects, and advantages relevant to the invention disclosed herein will become more apparent from the following detailed description and the accompanying drawings.

### BRIEF DESCRIPTION OF THE DRAWINGS

FIG. 1 is a diagram conceptually illustrating an example configuration of an information proposal system according to an embodiment.
FIG. 2 is a diagram illustrating an example need information item to be recorded in a need information database.
FIG. 3 is a diagram illustrating an example seed information item to be recorded in a seed information database.
FIG. 4 is a diagram illustrating an example of seed information items and its relevant information items to be displayed on a need side information proposing unit.
FIG. 5 is a diagram illustrating an example of need information items and its relevant information items to be displayed on a seed side information proposing unit.
FIG. 6 is a diagram conceptually illustrating an example configuration of an information proposal system according to an embodiment.
FIG. 7 is a diagram schematically exemplifying a hardware configuration when the information proposal systems exemplified in FIGS. 1 and 6 are actually operated.
FIG. 8 is a diagram schematically exemplifying a hardware configuration when the information proposal systems exemplified in FIGS. 1 and 6 are actually operated.

### DESCRIPTION OF THE PREFERRED EMBODIMENTS

Embodiments will be described below with reference to the attached drawings. Although Embodiments below will describe detailed features for describing the invention, they are mere exemplification and are not necessarily essential features for making Embodiments feasible.

The drawings are drawn in schematic form, and configurations are appropriately omitted or simplified in the drawings for convenience in description. Furthermore, the mutual relationships in size and position between configurations in the different drawings are not necessarily accurate but may be appropriately changed. The drawings such as plan views except cross-sectional views are sometimes hatched for facilitating the understanding of the details of Embodiments.

In the following description, the same reference numerals are assigned to the same constituent elements, and their names and functions are the same. Therefore, detailed description of such constituent elements may be omitted to avoid redundant description.

Unless otherwise specified, an expression "comprising", "including", or "having" a certain constituent element is not an exclusive expression for excluding the presence of the other constituent elements in the description herein.

Even when the ordinal numbers such as "first" and "second" are used herein, these terms are used for convenience to facilitate the understanding of the details of Embodiments. The order indicated by these ordinal numbers does not restrict the details of Embodiments.

### Embodiment 1

An information proposal system and an information proposal method according to Embodiment 1 will be described hereinafter.

### <Configuration of information proposal system>

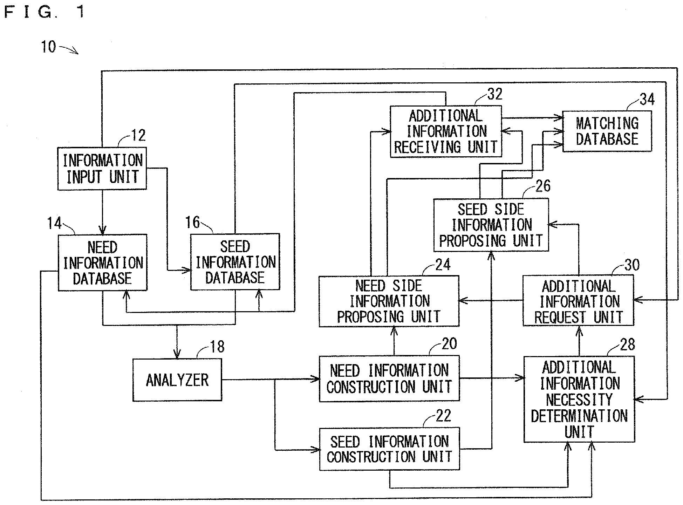

FIG. 1 is a diagram conceptually illustrating an example configuration of an information proposal system 10 according to Embodiment 1. The information proposal system 10 according to Embodiment 1 provides an information item on a combination of a need information item and at least one seed information item corresponding to the need information item.

As illustrated in the example of FIG. 1, the information proposal system 10 includes an information input unit 12, a need information database 14, a seed information database 16, an analyzer 18, a need information construction unit 20, a seed information construction unit 22, a need side information proposing unit 24, a seed side information proposing unit 26, an additional information necessity determination unit 28, an additional information request unit 30, an additional information receiving unit 32, and a matching database 34.

The information input unit 12 receives an information item input from an exterior (a user). For example, an information item on a need (a problem) provided from the user (a need information item), an information item on a seed (a solution) (a seed information item), or an additional information request to be input by the user for requesting an additional information item is input into the information input unit 12. One or both of the need information item and the seed information item are input into the information input unit 12 for making a match to be described later. An information item not to be input is retrieved from the need information database 14 or the seed information database 16.

The need information database 14 is a database in which need information items provided from the user are stored and recorded. The need information database 14 also records a need information item input into the additional information receiving unit 32 as an additional information item.

The seed information database 16 is a database in which seed information items provided from the user are stored and recorded. The seed information database 16 also records a seed information item input into the additional information receiving unit 32 as an additional information item.

The analyzer 18 generates combinations of need information items and seed information items. Here, the combinations of the need information items and the seed information items are not limited to combinations each including a single need information item and a single seed information item, but may include, for example, a combination of a single need information item and a plurality of seed information items. Then, the analyzer 18 analyzes a matching degree (a degree of fit, a similarity) between a need information item and a seed information item in the combination.

Specifically, the analyzer 18 performs a data mining process to analyze the matching degree (the degree of fit, the similarity) between the need information item and the seed information item. Examples of the data mining process include an association analysis and a cluster analysis. A neural network can be used in the data mining process. Particularly, when a recurrent neural network (RNN) is used, variable-length data such as text data can be handled. Furthermore, for example, a long short-term memory (LSTM) is applicable. The analyzer 18 can analyze not only Japanese text but also text in various languages (e.g., English, Chinese, Korean).

Furthermore, the analyzer 18 calculates matching degrees of combinations of all need information items and all seed information items as similarity scores, and rearranges the combinations of the need information items and the seed information items in descending order of the similarity scores. The analyzer 18 may change a weighting factor when calculating the similarity scores, based on attribute information (e.g., credit information) or past results of the user that is a provider of the need information items (or the seed information items). Furthermore, the analyzer 18 may regulate the similarity score based on positioning of a need information item or a seed information item in the market. For example, the analyzer 18 increases a similarity score for a seed information item being circulated in the market, or increases a similarity score for a seed information item that can be monopolized in the market.

The need information construction unit 20 records the need information item that forms the combination, in association with the seed information item paired with the need information item. The need information construction unit 20 records, in association with the seed information item that forms the combination, various information items (a paired seed information item or an information item on the user who has provided the seed information item) for making a proposal to the user (a need side) who has inputted a need.

The seed information construction unit 22 records the seed information item that forms the combination, in association with the need information item paired with the seed information item. Furthermore, the seed information construction unit 22 records, in association with the need information item that forms the combination, various information items (a paired need information item or an information item on the user who has provided the need information item) for making a proposal to the user (a need side) who has inputted a seed.

The need side information proposing unit 24 proposes the seed information item that forms the combination and its relevant information item which are information items for the need side built by the need information construction unit 20 (information items sought by the need side), while displaying these to the need side.

The need side information proposing unit 24 may display a need information item together. In other words, the need side information proposing unit 24 may propose a need information item similar to the need information item that is an input information item to the need side, and present, with reference to the matching database 34 to the user, with which seed information item the similar need made a match in the past (which combination has been made). This can present choices of seed information items for making a match to the user in a different perspective.

The seed side information proposing unit 26 proposes the need information item that forms the combination and its relevant information item which are information items for the seed side built by the seed information construction unit 22 (information items sought by the seed side), while displaying these to the seed side.

The seed side information proposing unit 26 may display a seed information item together. In other words, the seed side information proposing unit 26 may propose a seed information item similar to the seed information item that is an input information item to the seed side, and present, with reference to the matching database 34 to the user, with which need information item the similar seed made a match in the past (which combination has been made). This can present choices of need information items for making a match to the user in a different perspective.

The additional information necessity determination unit 28 determines whether an additional information item is necessary for the need information item recorded in the need information database 14 itself, the seed information item recorded in the seed information database 16 itself, or a combination of the need information item and the seed information item. Here, the additional information item is, for example, an information item on details of the need information item or an information item on the technology on the seed information item itself.

Specifically, the additional information necessity determination unit 28 calculates an information amount (the number of characters or the number of types of information items) of input information items (a need information item or a seed information item) input into the information input unit 12 or an information amount of a combination of the need information item and the seed information item (including a height of a similarity score), and determines that the additional information item is necessary when at least one of these information amounts is less than or equal to a predefined threshold.

Then, when determining that the additional information item is necessary, the additional information necessity determination unit 28 generates an additional information request and outputs the additional information request to the additional information request unit 30. The additional information necessity determination unit 28 obtains the information amount of the combination of the need information item and the seed information item, with reference to the need information construction unit 20 or the seed information construction unit 22.

When an additional information request is input from the additional information necessity determination unit 28 or from the user through the information input unit 12, the additional information request unit 30 adds an indication of requesting an additional information item (e.g., an indication using an interactive UI) to the need side information proposing unit 24 or the seed side information proposing unit 26.

When the additional information request is on a need information item, the additional information request unit 30 adds an indication of requesting an additional information item to the need side information proposing unit 24, and requests addition of an information item to the need side. Furthermore, when the additional information request is on a seed information item, the additional information request unit 30 adds an indication of requesting an additional information item to the seed side information proposing unit 26, and requests addition of an information item to the seed side.

The additional information receiving unit 32 receives an additional information item input from the need side or the seed side according to the additional information request. Furthermore, the additional information receiving unit 32 reflects the input additional information item on the need information item recorded in the need information database 14 or the seed information item recorded in the seed information database 16. The reflected need information item or seed information item is available in the following matching.

When a match between a need information item and a seed information item which form a combination is made, the matching database 34 records the combination. The matching database 34 records a combination in which a match is made, in the combinations displayed on the need side information proposing unit 24 or the combinations displayed on the seed side information proposing unit 26. When the additional information item is added to this combination (when the additional information receiving unit 32 receives the corresponding additional information item), the matching database 34 records the combination in association with the additional information item.

The user determines whether a match between a need information item and a seed information item which form a combination is made, in consideration of a matching degree (a degree of fit) between the need information item and the seed information item.

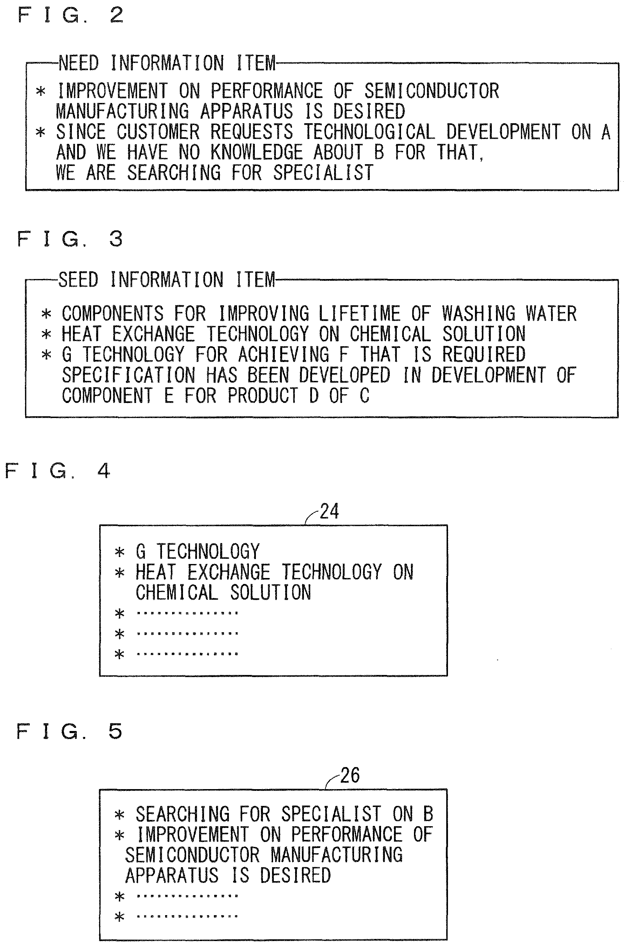

FIG. 2 is a diagram illustrating an example need information item to be recorded in the need information database 14.

As illustrated in the example of FIG. 2, examples of the need information items include a problem, a difficulty, and a desired object of the user, and specialist searching information, such as "improvement on the performance of a semiconductor manufacturing apparatus is desired" or "since a customer requests technological development on A and we have no knowledge about B for that, we are searching for the specialist".

FIG. 3 is a diagram illustrating an example seed information item to be recorded in the seed information database 16.

As illustrated in the example of FIG. 3, examples of the seed information items include a possessed technology, know-how, an information item on a product, an information item on a service, and past examples, such as "components for improving the lifetime of washing water", "heat exchange technology on a chemical solution", and "G technology for achieving F that is a required specification has been developed in development of a component E for a product D of C".

FIG. 4 is a diagram illustrating an example of seed information items and its relevant information items to be displayed on the need side information proposing unit 24.

As illustrated in the example of FIG. 4, the need side information proposing unit 24 displays the seed information items, for example, in descending order of the matching degrees (the need information construction unit 20 rearranges the seed information items in descending order of the matching degrees and records the seed information items). Displaying the seed information items in descending order of the matching degrees with the need information items allows the user to effectively select a seed information item with which a match is made from among the displayed seed information items.

Although the seed information items are displayed in descending order of the matching degrees in FIG. 4, the order and the number of indications are not limited to those illustrated in FIG. 4. Furthermore, a seed information item with a low matching degree can be browsed by an operation of, for example, scrolling down a screen. An information item relevant to each of the seed information items (an information item on the provider of the seed information item or a utilization result on the seed information item) may be, for example, displayed by selecting the seed information item or displayed near the corresponding seed information item.

FIG. 5 is a diagram illustrating an example of need information items and its relevant information items to be displayed on the seed side information proposing unit 26.

As illustrated in the example of FIG. 5, the seed side information proposing unit 26 displays the need information items, for example, in descending order of the matching degrees (the seed information construction unit 22 rearranges the need information items in descending order of the matching degrees and records the need information items). Displaying the need information items in descending order of the matching degrees with the seed information items allows the user to effectively select a need information item with which a match is made from among the displayed need information items.

Although the need information items are displayed in descending order of the matching degrees in FIG. 5, the order and the number of indications are not limited to those illustrated in FIG. 5. Furthermore, a need information item with a low matching degree can be browsed by an operation of, for example, scrolling down a screen. An information item relevant to each of the need information items (an information item on the provider of the need information item or a matching result on the need information item) may be, for example, displayed by selecting the need information item or displayed near the corresponding need information item.

As such, the information proposal system 10 according to Embodiment 1 can promote a proper match between a need information item and a seed information item by requesting an additional information item.

### Embodiment 2

An information proposal system and an information proposal method according to Embodiment 2 will be described. In the following description, the same reference numerals are assigned to the same constituent elements described in Embodiment above, and the detailed description will be appropriately omitted.

### <Configuration of information proposal system>

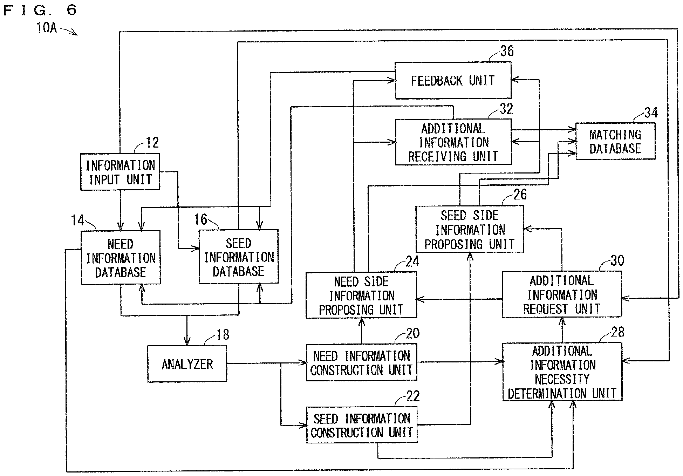

FIG. 6 is a diagram conceptually illustrating an example configuration of an information proposal system 10A according to Embodiment 2. As illustrated in the example of FIG. 6, the information proposal system 10A includes the information input unit 12, the need information database 14, the seed information database 16, the analyzer 18, the need information construction unit 20, the seed information construction unit 22, the need side information proposing unit 24, the seed side information proposing unit 26, the additional information necessity determination unit 28, the additional information request unit 30, the additional information receiving unit 32, the matching database 34, and a feedback unit 36.

The feedback unit 36 is a functional unit for exchanging information (chatting, etc.,) between a provider of need information items (including an additional information item) and a provider of seed information items (including an additional information item).

The information item exchanged through the feedback unit 36 is reflected on the need information database 14 and the seed information database 16 as a feedback information item. Then, the information item is considered for a weighting factor in calculating similarity scores by the analyzer 18, an information item to be associated with the need information item by the need information construction unit 20, or an information item to be associated with the seed information item by the seed information construction unit 22. The matching accuracy can be improved by reflecting the information item exchanged through the feedback unit 36 on the need information database 14 and the seed information database 16 and considering the information item in the matching.

### <Hardware configuration of information proposal system>

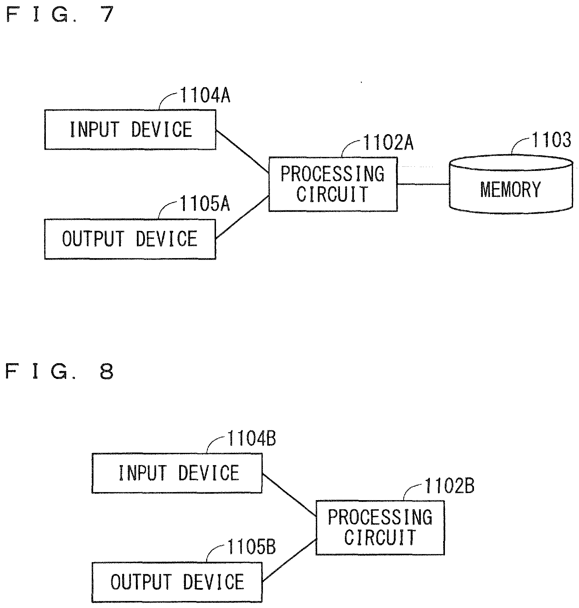

FIGS. 7 and 8 are diagrams schematically exemplifying hardware configurations when the information proposal systems illustrated in the examples of FIGS. 1 and 6 are actually operated.

The hardware configurations exemplified in FIGS. 7 and 8 do not always coincide in, for example, number with the configurations exemplified in FIGS. 1 and 6. This is because the configurations exemplified in FIGS. 1 and 6 illustrate conceptual units.

Thus, at least one of the following cases is conceivable: a case where one of the configurations exemplified in FIGS. 1 and 6 includes a plurality of the hardware configurations exemplified in FIGS. 7 and 8; a case where one of the configurations exemplified in FIGS. 1 and 6 corresponds to a part of the hardware configurations exemplified in FIGS. 7 and 8; and a case where one of the hardware configurations exemplified in FIGS. 7 and 8 includes a plurality of the configurations exemplified in FIGS. 7 and 8.

FIG. 7 illustrates, as a hardware configuration for implementing, for example, the need information database 14, the seed information database 16, the analyzer 18, the need information construction unit 20, the seed information construction unit 22, the need side information proposing unit 24, the seed side information proposing unit 26, the additional information necessity determination unit 28, the additional information request unit 30, the additional information receiving unit 32, and the matching database 34 in FIGS. 1 and 6, a processing circuit 1102A that performs computation, a memory 1103 that can store information items, an input device 1104A that can input an information item such as a mouse, a keyboard, a touch panel, or various switches, and an output device 1105A (including a case where the input device 1104A is shared as the output device 1105A) that can output an information item such as a display, a liquid crystal display, or a lamp. This configuration applies to any of Embodiments above.

FIG. 8 illustrates, as a hardware configuration for implementing, for example, the need information database 14, the seed information database 16, the analyzer 18, the need information construction unit 20, the seed information construction unit 22, the need side information proposing unit 24, the seed side information proposing unit 26, the additional information necessity determination unit 28, the additional information request unit 30, the additional information receiving unit 32, and the matching database 34 in FIGS. 1 and 6, a processing circuit 1102B that performs computation, an input device 1104B that can input an information item such as a mouse, a keyboard, a touch panel, or various switches, and an output device 1105B (including a case where the input device 1104B is shared as the output device 1105B) that can output an information item such as a display, a liquid crystal display, or a lamp. This configuration applies to any of Embodiments above.

The need information database 14, the seed information database 16, and the matching database 34 are implemented by the memory 1103 or another memory (not illustrated herein).

Examples of the memory 1103 may include a hard disk drive (i.e., HDD), volatile or non-volatile semiconductor memories such as a random access memory (i.e., RAM), a read only memory (i.e., ROM), a flash memory, an erasable programmable read-only memory (EPROM), and an electrically erasable programmable read-only memory (EEPROM), memories (recording media) including a magnetic disc, a flexible disk, an optical disk, a compact disk, a mini disk, and a DVD, and any recording media to be used in the future.

The processing circuit 1102A may be the one that executes a program stored in, for example, the memory 1103, an external CD-ROM, an external DVD-ROM, or an external flash memory. In other words, the processing circuit 1102A may be, for example, a central processing unit (i.e., CPU), a microprocessor, a microcomputer, or a digital signal processor (i.e., DSP).

When the processing circuit 1102A is the one that executes a program stored in, for example, the memory 1103, an external CD-ROM, an external DVD-ROM, or an external flash memory, the analyzer 18, the need information construction unit 20, the seed information construction unit 22, the need side information proposing unit 24, the seed side information proposing unit 26, the additional information necessity determination unit 28, the additional information request unit 30, and the additional information receiving unit 32 are implemented by software, firmware, or a combination of software and firmware which causes the processing circuit 1102A to execute the program stored in the memory 1103.

The functions of the analyzer 18, the need information construction unit 20, the seed information construction unit 22, the need side information proposing unit 24, the seed side information proposing unit 26, the additional information necessity determination unit 28, the additional information request unit 30, and the additional information receiving unit 32 may be performed by, for example, coordination of a plurality of processing circuits.

The software and the firmware may be described as programs, and stored in the memory 1103. In such a case, the processing circuit 1102A performs the functions by reading and executing the program stored in the memory 1103. In other words, the program that causes the processing circuit 1102A to consequently perform the functions may be stored in the memory 1103.

Alternatively, the processing circuit 1102B may be dedicated hardware. In other words, the processing circuit 1102B may be, for example, a single circuit, a composite circuit, a programmed processor, a parallel-programmed processor, an integrated circuit (an application-specific integrated circuit (i.e., ASIC)), a field-programmable gate array (FPGA), or a circuit obtained by combining these.

When the processing circuit 1102B is dedicated hardware, the analyzer 18, the need information construction unit 20, the seed information construction unit 22, the need side information proposing unit 24, the seed side information proposing unit 26, the additional information necessity determination unit 28, the additional information request unit 30, and the additional information receiving unit 32 are implemented by operating the processing circuit 1102B. The functions of the analyzer 18, the need information construction unit 20, the seed information construction unit 22, the need side information proposing unit 24, the seed side information proposing unit 26, the additional information necessity determination unit 28, the additional information request unit 30, and the additional information receiving unit 32 may be performed by separate circuits or a single circuit.

The processing circuit 1102A that executes the program stored in the memory 1103 may perform a part of the functions of the analyzer 18, the need information construction unit 20, the seed information construction unit 22, the need side information proposing unit 24, the seed side information proposing unit 26, the additional information necessity determination unit 28, the additional information request unit 30, and the additional information receiving unit 32. The processing circuit 1102B that is dedicated hardware may perform another part of the functions.

The information input unit 12 is implemented by the input device 1104A or the input device 1104B.

Furthermore, the need side information proposing unit 24 and the seed side information proposing unit 26 are also implemented by the output device 1105A or the output device 1105B (the input devices may be shared as the output device 1105A or the output device 1105B). In other words, the need side information proposing unit 24 and the seed side information proposing unit 26 are implemented by causing the output device 1105A or the output device 1105B to display a need information item, a seed information item, or a combination of these.

### Advantages produced by Embodiments above

Next, example advantages produced by Embodiments above will be described. While the advantages are described based on the specific configurations whose examples are described in Embodiments above, the configurations may be replaced with other specific configurations whose examples are described herein as long as the same advantages are produced. In other words, while only one of the specific configurations is sometimes described as a representative for convenience, the configuration may be replaced with another specific configuration associated with the specific configuration described as a representative.

The replacement may be performed across a plurality of Embodiments. In other words, the replacement may be performed when combinations of the configurations whose examples are described in different Embodiments produce the same advantages.

According to Embodiments above, the information proposal system 10 includes the information input unit 12, the analyzer 18, a proposing unit, and the additional information request unit 30. The proposing unit herein is, for example, at least one of the need side information proposing unit 24 and the seed side information proposing unit 26. At least one of a need information item or at least one seed information item is input into the information input unit 12 as an input information item. The analyzer 18 generates a combination of the input information item and the need information item or the at least one seed information item.

Furthermore, the analyzer 18 analyzes a matching degree between the input information item and the need information item or the at least one seed information item. The proposing unit proposes at least one combination of the need information item and the at least one seed information item according to the matching degree. When an additional information request is input, the additional information request unit 30 requests an additional information item that is an information item to be added in association with the input information item.

Furthermore, the information proposal system 10 includes the input device 1104A and the output device 1105A according to Embodiments above. Furthermore, the information proposal system 10 includes the processing circuit 1102A that executes a program, and the memory 1103 in which the program to be executed is stored. The following operations are performed by causing the processing circuit 1102A to execute the program.

In other words, when at least one of the need information item or the at least one seed information item is input as an input information item, a matching degree between the input information item and the need information item or the at least one seed information item is analyzed, and a combination of the input information item and the need information item or the at least one seed information item is generated. Then, at least one combination of the need information item and the at least one seed information item is proposed according to the matching degree. When an additional information request is input, an additional information item that is an information item to be added in association with the input information item is requested.

Furthermore, the information proposal system 10 includes the input device 1104B and the output device 1105B according to Embodiments above. Furthermore, the information proposal system 10 includes the processing circuit 1102B that is dedicated hardware. The processing circuit 1102B that is dedicated hardware performs the following operations.

In other words, when at least one of the need information item or the at least one seed information item is input as an input information item, the processing circuit 1102B that is dedicated hardware analyzes a matching degree between the input information item and the need information item or the at least one seed information item, and generates a combination of the input information item and the need information item or the at least one seed information item. Then, the processing circuit 1102B proposes at least one combination of the need information item and the at least one seed information item according to the matching degree. When an additional information request is input, the processing circuit 1102B requests an additional information item that is an information item to be added in association with the input information item.

Such a configuration can promote a proper match between a need information item and a seed information item by requesting an additional information item.

When the other configurations whose examples are described herein are appropriately added to the configuration above, that is, the other configurations herein which are not mentioned as the configuration above are appropriately added, the same advantages can be produced.

Furthermore, the information proposal system 10 includes a display for displaying the at least one combination according to Embodiments above. Here, the display corresponds to, for example, at least one of the output device 1105A or the output device 1105B. The analyzer 18 calculates, as the matching degree, a similarity between the input information item and the need information item or the at least one seed information item. Then, the output device 1105A or the output device 1105B displays a plurality of combinations in descending order of similarities. Displaying the seed information items or the need information items in descending order of the matching degrees in such a configuration allows the user to effectively select the seed information item or the need information item that can make a match from among the displayed information items.

Furthermore, the additional information request is input when an information amount of the input information item before the analyzer 18 generates the combination is less than or equal to a first threshold according to Embodiments above. In such a configuration, when the information amount of input information items (need information items or seed information items) input from an exterior is insufficient for matching, an additional information request can be generated. This can improve matching accuracy between a need information item and a seed information item.

Furthermore, the additional information request is input when a similarity score between the input information item and the need information item or the at least one seed information item in the combination generated by the analyzer 18 is less than or equal to a second threshold according to Embodiments above. When the similarity score between the need information item and the at least one seed information item decreases due to insufficient information amount, the decrease can be solved by generating an additional information request, which can improve matching accuracy.

Furthermore, the user inputs the additional information request from an exterior according to Embodiments above. Except a case where the additional information necessity determination unit 28 generates an additional information request, when the user inputs an additional information request under any given condition, matching accuracy between a need information item and a seed information item can be improved in such a configuration.

Furthermore, the at least one combination is generated from the need information item and a plurality of seed information items according to Embodiments above. Since such a configuration allows searching for a solution for solving a need in combination with the plurality of seed information items, flexibility of the combinations will be increased.

Furthermore, the analyzer 18 regulates the matching degree, based on an attribute information item of the need information item or the at least one seed information item according to Embodiments above. Such a configuration allows selection of a combination more proper for commercialization in consideration of, for example, reliability of the need information item or the seed information item.

Furthermore, the analyzer 18 regulates the matching degree, based on positioning of the need information item or the at least one seed information item in a market according to Embodiments above. Such a configuration allows selection of an advantageous combination after commercialization by determining a seed information item being circulated in the market preferentially as a candidate for the combination, or determining a seed information item that can be monopolized in the market preferentially as a candidate for the combination.

Furthermore, the information proposal system 10 includes the matching database 34 for recording the at least one combination in which a match is made according to Embodiments above. When the input information item is the need information item, the need side information proposing unit 24 proposes together a need information item similar to the input information item in the at least one combination recorded in the matching database 34. When the input information item is the at least one seed information item, the seed side information proposing unit 26 proposes together a seed information item similar to the input information item in the at least one combination recorded in the matching database 34. Such a configuration can present choices of need information items or seed information items for making a match to the user in a different perspective.

According to Embodiments above, when the input information item is the need information item, the need side information proposing unit 24 proposes together a combination including a need information item similar to the input information item in the at least one combination recorded in the matching database 34. When the input information item is the at least one seed information item, the seed side information proposing unit 26 proposes together a combination including a seed information item similar to the input information item in the at least one combination recorded in the matching database 34. Such a configuration can present choices of need information items or seed information items for making a match to the user in a different perspective.

According to Embodiments above, the information proposal system 10A includes: the need information database 14 to record the need information item; the seed information database 16 to record the at least one seed information item; and the feedback unit 36. The feedback unit 36 reflects, on at least one of the need information database 14 or the seed information database 16, an exchange of an information item between a provider of the input information item and a provider of the need information item or the at least one seed information item, the input information item, the need information item, and the at least one seed information item being included in the combination. In such a configuration, the matching accuracy can be improved by reflecting the information item exchanged through the feedback unit 36 on the need information database 14 and the seed information database 16 and considering the information item in the matching.

In an information proposal method according to Embodiments above, at least one of the need information item or the at least one seed information item is input as an input information item. Then, a matching degree between the input information item and the need information item or the at least one seed information item is analyzed, and a combination of the input information item and the need information item or the at least one seed information item is generated. Then, at least one combination of the need information item and the at least one seed information item is proposed according to the matching degree. When an additional information request is input, an additional information item that is an information item to be added in association with the input information item is requested.

Such a configuration can promote a proper match between a need information item and a seed information item by requesting an additional information item.

When there is no particular limitation, the order of the processes can be changed.

When the other configurations whose examples are described herein are appropriately added to the configuration above, that is, the other configurations herein which are not mentioned as the configuration above are appropriately added, the same advantages can be produced.

### <Modifications of Embodiments above>

Although Embodiments described above sometimes specify dimensions, shapes, relative arrangement relationships, or conditions for implementation of each of the constituent elements, these are examples in all aspects and are not restrictive.

Furthermore, when a constituent element is described as one element in Embodiments above, the number of the constituent elements may be more than one unless it is contradictory.

The description herein is referred to for all the objectives relevant to the present invention, and is not regarded as prior art.

Furthermore, each of the constituent elements in Embodiments above is assumed as software or firmware, or hardware corresponding to the software or the firmware, is referred to as, for example, a part as software, and is referred to as, for example, circuitry as hardware.

### EXPLANATION OF REFERENCE SIGNS

10 information proposal system,
10A information proposal system,
12 information input unit,
14 need information database,
16 seed information database,
18 analyzer,
20 need information construction unit,
22 seed information construction unit,
24 need side information proposing unit,
26 seed side information proposing unit,
28 additional information necessity determination unit,
30 additional information request unit,
32 additional information receiving unit,
34 matching database,
36 feedback unit,
1102A processing circuit,
1102B processing circuit,
1103 memory,
1104A input device,
1104B input device,
1105A output device,
1105B output device.

## Claims

1. An information proposal system that provides an information item on a combination of a need information item and at least one seed information item corresponding to the need information item, the information proposal system comprising:
an information input unit into which at least one of the need information item or the at least one seed information item is input as an input information item;
an analyzer to generate a combination of the input information item and the need information item or the at least one seed information item, and analyze a matching degree between the input information item and the need information item or the at least one seed information item;
a proposing unit to propose at least one combination of the need information item and the at least one seed information item according to the matching degree; and
an additional information request unit to request an additional information item that is an information item to be added in association with the input information item when an additional information request is input.

2. The information proposal system according to claim 1,
further comprising
a display to display the at least one combination,
wherein the analyzer calculates, as the matching degree, a similarity between the input information item and the need information item or the at least one seed information item, and
the display displays the at least one combination comprising a plurality of combinations in descending order of similarities.

3. The information proposal system according to claim 1 or 2,
wherein the additional information request is input when an information amount of the input information item before the analyzer generates the combination is less than or equal to a first threshold.

4. The information proposal system according to claim 1 or 2,
wherein the additional information request is input when a similarity between the input information item and the need information item or the at least one seed information item in the combination generated by the analyzer is less than or equal to a second threshold.

5. The information proposal system according to claim 1 or 2,
wherein a user inputs the additional information request from an exterior.

6. The information proposal system according to any one of claims 1 to 5,
wherein the at least one combination is generated from the need information item and the at least one seed information item comprising a plurality of seed information items.

7. The information proposal system according to any one of claims 1 to 6,
wherein the analyzer regulates the matching degree, based on an attribute information item of the need information item or the at least one seed information item.

8. The information proposal system according to any one of claims 1 to 7,
wherein the analyzer regulates the matching degree, based on positioning of the need information item or the at least one seed information item in a market.

9. The information proposal system according to any one of claims 1 to 8, further comprising
a matching database to record the at least one combination in which a match is made,
wherein when the input information item is the need information item, the proposing unit proposes together a need information item similar to the input information item in the at least one combination recorded in the matching database, and
when the input information item is the at least one seed information item, the proposing unit proposes together a seed information item similar to the input information item in the at least one combination recorded in the matching database.

10. The information proposal system according to claim 9,
wherein when the input information item is the need information item, the proposing unit proposes together a combination including a need information item similar to the input information item in the at least one combination recorded in the matching database, and
when the input information item is the at least one seed information item, the proposing unit proposes together a combination including a seed information item similar to the input information item in the at least one combination recorded in the matching database.

11. The information proposal system according to any one of claims 1 to 10, further comprising:
a need information database to record the need information item;
a seed information database to record the at least one seed information item; and
a feedback unit to reflect, on at least one of the need information database or the seed information database, an exchange of an information item between a provider of the input information item and a provider of the need information item or the at least one seed information item, the input information item, the need information item, and the at least one seed information item being included in the combination.

12. An information proposal method of providing an information item on a combination of a need information item and at least one seed information item corresponding to the need information item,
wherein at least one of the need information item or the at least one seed information item is input as an input information item, the information proposal method comprising:
analyzing a matching degree between the input information item and the need information item or the at least one seed information item, and generating a combination of the input information item and the need information item or the at least one seed information item;
proposing at least one combination of the need information item and the at least one seed information item according to the matching degree; and
requesting an additional information item that is an information item to be added in association with the input information item when an additional information request is input.
